# EUROPÄISCHE PATENTSCHRIFT

(11) **EP 2 706 279 B1**
(45) Veröffentlichungstag und Bekanntmachung des Hinweises auf die Patenterteilung: **25.05.2016**
(21) Anmeldenummer: 13174684.4
(22) Anmeldetag: 02.07.2013
(51) Int. Cl.: F16L 37/091

(54) **Steckkupplung für ein metallisches Rohr, insbesondere für Wasserleitungen**
Plug-in coupling for a metallic pipe, in particular for water pipes
Raccord enfichable pour un tube métallique, notamment pour des conduites d'eau

(30) Priorität: 10.09.2012 AT 503712012
(43) Veröffentlichungstag der Anmeldung: 12.03.2014
(73) Patentinhaber: KE KELIT Kunststoffwerk Gesellschaft m.b.H., 4020 Linz (AT)
(72) Erfinder: Ratschmann, Elmar, 4201 Hellmonsödt (AT); Linzner, Werner, 4616 Weißkirchen (AT)
(74) Vertreter: Patentanwaltskanzlei Hübscher

(56) Entgegenhaltungen:
- EP-A1- 2 085 673
- AU-B2- 567 157
- DE-B3- 10 321 301
- DE-U1-202006 002 434
- JP-A- 2011 089 564
- US-A- 4 123 090

## Beschreibung

Die Erfindung bezieht sich auf eine Steckkupplung für ein Rohr, insbesondere für Wasserleitungen, mit einer das Rohrende aufnehmenden Kupplungshülse, mit einem in die Kupplungshülse eingesetzten Dichtungsring, mit einem dem Dichtungsring in Einsteckrichtung des Rohrendes vorgelagerten Sperrring, der gegen das Rohrende vorstehende, in Einsteckrichtung geneigte Rückhalteklauen bildet, und mit einem dem Dichtungsring ebenfalls vorgelagerten, gegenüber der Kupplungshülse in Einsteckrichtung axial abgestützten Ringkörper.

Um in einfacher Art eine Steckkupplung für einen Rohranschluss vorsehen zu können, ist es bekannt (EP 2 336 625 A2), in einer das eingesteckte Rohrende unter Zwischenschaltung eines Dichtungsrings aufnehmenden Kupplungshülse einen Sperrring vorzusehen, der gegen das Rohrende vorstehende, in Einsteckrichtung geneigte Rückhalteklauen aufweist, die sich beim Versuch, das Rohrende aus der Kupplungshülse herauszuziehen am Außenmantel des Rohrendes verkanten und dadurch einen entsprechenden Widerstand gegen ein Ausziehen des Rohrendes aus der Kupplungshülse aufbauen. Aufgrund der gewählten Neigung werden die Rückhalteklauen bei einer Rohrbelastung im Ausziehsinn mit einem zur Neigung gegensinnigen Drehmoment beaufschlagt, das für eine Zunahme des Anpressdrucks der scharfkantig ausgebildeten Rückhalteklauen am Außenmantel des Rohrendes und damit für eine sichere Selbsthemmung mit zunehmenden Ausziehkräften sorgt. Voraussetzung hierfür ist eine entsprechende Abstützung des Sperrrings in axialer Richtung. Diese axiale Abstützung kann vorteilhaft über einen Distanzring erfolgen. Zusätzlich kann ein Ringkörper als Einführhilfe für das Rohrende vorgesehen werden.

Da insbesondere auf Baustellen damit gerechnet werden muss, dass die anzuschließenden Rohrenden beim oder nach einem Ablängen nicht entsprechend bearbeitet werden, besteht die Gefahr, dass beim Einführen des Rohrendes in die Kupplungshülse der dem Sperrring nachgeordnete Dichtungsring durch die Stirnseite des Rohrendes beschädigt wird.

Um eine Beschädigungsgefahr für den Dichtungsring zu bannen, ist es bei einer Steckverbindung mit einem Anschlussnippel zum Aufschieben des anzuschließenden Rohrs und einer das aufgeschobene Rohr umschließenden Hülse bekannt (EP 1 219 883 A2), auf dem den Dichtungsring aufnehmenden Anschlussnippel einen axial verschiebbaren Schutzring vorzusehen, der den Dichtungsring abdeckt und einen radial nach außen vorstehenden Mitnehmeransatz auf der in Einsteckrichtung hinteren Stirnseite aufweist, sodass beim Aufschieben des Rohrendes auf den Anschlussnippel die Stirnseite des Rohrendes entlang des Schutzrings über den Dichtungsring hinweggleitet, bis die Stirnseite des Rohrendes am Mitnehmeranschlag anschlägt. Der Schutzring wird dann vom Rohrende mitgenommen und in weiterer Folge vom Dichtungsring mit der Wirkung axial abgezogen, dass der Dichtungsring den Ringspalt zwischen dem Anschlussnippel und dem aufgeschobenen Rohrende abdichtet. Abgesehen davon, dass ein solcher Schutzring bei einer Steckkupplung mit einer das eingesteckte Rohrende aufnehmenden Kupplungshülse den Konstruktionsaufwand erheblich erhöht, ergeben sich bei Steckkupplungen dieser Art Platzschwierigkeiten für die Anordnung eines Schutzrings.

Zum Schutz des Dichtungsrings einer Pressverbindung zwischen einer Presshülse und einem Rohrende ist es außerdem bekannt (EP 1 081 423 A1), auf das Rohrende eine Schutzhülse aufzustecken, die die Stirnseite des Rohrendes mit einem nach innen gerichteten Flansch übergreift und auf dem gegenüberliegenden Ende einen Außenflansch bildet, der sich an der Stirnseite des Einführendes der Presshülse abstützt. Diese Schutzhülse ist zwischen den beiden Flanschen mit einer Sollbruchstelle versehen, sodass beim Einführen des Rohrendes in die Presshülse die Schutzhülse im Bereich des Dichtungsringes reißt und der Dichtungsring beim Zusammenpressen der Presshülse an das unbedeckte Rohrende angedrückt wird. Abgesehen davon, dass die axiale Sicherung des Rohrendes über eine kraftschlüssige Pressverbindung mit einer Rohrhalterung über einen mit Rückhalteklauen versehenen Sperrring nicht vergleichbare Konstruktionsverhältnisse bedingt, muss die Schutzhülse auf das Rohrende aufgesteckt werden, was die Handhabung erschwert und einen zusätzlichen, losen Konstruktionsteil erfordert.

Der Erfindung liegt somit die Aufgabe zugrunde, eine Steckkupplung der eingangs geschilderten Art so auszugestalten, dass bei einfachen Handhabungs- und Konstruktionsbedingungen eine Beschädigungsgefahr für den Dichtungsring durch die Stirnseite des anzuschließenden Rohrs ausgeschlossen werden kann.

Die Erfindung löst die gestellte Aufgabe dadurch, dass der Ringkörper einen über eine Sollbruchverbindung angeschlossenen Schutzring zum Umfassen der Stirnseite des Rohrendes von außen aufweist.

Durch die Verbindung des Schutzrings mit einem bereits vorhandenen Ringkörper wird zunächst eine erhebliche Konstruktionsvereinfachung erreicht, weil kein zusätzlicher Konstruktionsteil erforderlich wird. Damit kann auch das sonst anstehende Platzproblem vorteilhaft gelöst werden, weil durch die Zusammenfassung des Schutzrings mit einem bereits vorhandenen Ringkörper der Platzbedarf minimiert werden kann. Der Anschluss des Schutzrings an den Ringkörper über eine Sollbruchverbindung stellt nicht nur die Mitnahme des Schutzrings sicher, wenn die Stirnseite des Rohrendes in die Kupplungshülse eingesteckt wird und den Schutzring vom Ringkörper trennt, sobald der die Stirnseite umfassende Schutzring vom Rohrende in axialer Richtung mitgenommen wird, sondern vereinfacht auch die Handhabung, weil der Schutzring keinen losen Bauteil bildet und demnach der Kupplungshülse in einer konstruktiv vorgegebenen Einbaulage zugeordnet wird. Der die Stirnseite des Rohrendes von außen umfassende Schutzring bildet somit einen Mitnehmeranschlag, der nach dem Abtrennen des Schutzrings vom Ringkörper dafür sorgt, dass der die Stirnseite und den anschließenden Außenrand des Rohrendes umfassende Schutzring beim Vorbeibewegen der Stirnseite des Rohrendes am Dichtungsring den Dichtungsring gegenüber dem Rohrende abdeckt, sodass das Rohrende den Dichtring mit seinem Stirnseitenbereich nicht beschädigen kann. Mit der Verlagerung des Rohrendes in eine üblicherweise anschlagbegrenzte Einsteckstellung wird der Schutzring wieder vom Dichtring abgezogen, der sich ja dann unter einer entsprechenden Vorspannung an den Außenmantel des Rohrendes dichtend anlegen kann.

Zur Mitnahme des Schutzrings und zum Schutz des Dichtungsrings bedarf es lediglich eines Umgreifens der Stirnseite des Rohrendes durch den Schutzring. Die Mitnahme des Schutzrings durch das Rohrende wird jedoch verbessert, wenn der Schutzring einen U-förmigen Querschnitt aufweist, was dazu führt, dass der Schutzring das stirnseitige Rohrende von außen und innen übergreift.

Wie bereits ausgeführt wurde, wird ein bereits sonst vorhandener Ringkörper dazu genützt, den Schutzring über eine Sollbruchverbindung in einer für das Einführen des Rohrendes in die Kupplungshülse vorteilhaften Fangstellung zu halten, in der die Stirnseite des Rohrendes am Schutzring anschließt. Der Ringkörper kann dabei einen Distanzring für den Sperrring bilden. Es ist aber auch möglich, dass der den Schutzring aufweisende Ringkörper eine Einführhilfe für das Rohrende darstellt. Der Schutzring kann dabei über den Ringkörper in Einsteckrichtung sowohl vor als auch nach dem Sperrring positioniert werden. Wird der Schutzring für die Stirnseite des Rohrendes zwischen dem Sperrring und dem Dichtungsring vorgesehen, so braucht der Schutzring nicht über die scharfkantigen Rückhalteklauen des Sperrrings verschoben zu werden. Der Schutzring kann dabei auch von einem dem Sperrring in Einsteckrichtung vorgelagerten Ringkörper getragen werden, wenn die Rückhalteklauen des Sperrrings durch entsprechende Durchtrittsöffnungen im Bereich des Verbindungsabschnitts zwischen dem dem Sperrring vorgelagerten Ringkörper und dem dem Sperrring nachgeordneten Schutzring ragen.

Ist für das in die Kupplungshülse einzuführende Rohrende ein die Einstecktiefe begrenzender, axialer Anschlag vorgesehen, so ist darauf zu achten, dass der axiale Abstand des Anschlags vom Dichtungsring größer als die axiale Höhe des Schutzrings auf der Außenseite des Rohrendes ist, damit der Schutzring in der Anschlagstellung des Rohrendes vollständig vom Dichtungsring abgezogen ist.

In der Zeichnung ist der Erfindungsgegenstand beispielsweise dargestellt. Es zeigen
- Fig. 1: eine erfindungsgemäße Steckkupplung vor dem Einführen eines anzuschließenden Rohres in einem vereinfachten Axialschnitt,
- Fig. 2: eine der Fig. 1 entsprechende Darstellung dieser Steckkupplung nach dem Einstecken des Rohrendes in die Kupplungshülse und
- Fig. 3: eine der Fig. 1 entsprechende Darstellung einer Ausführungsvariante einer erfindungsgemäßen Steckkupplung.

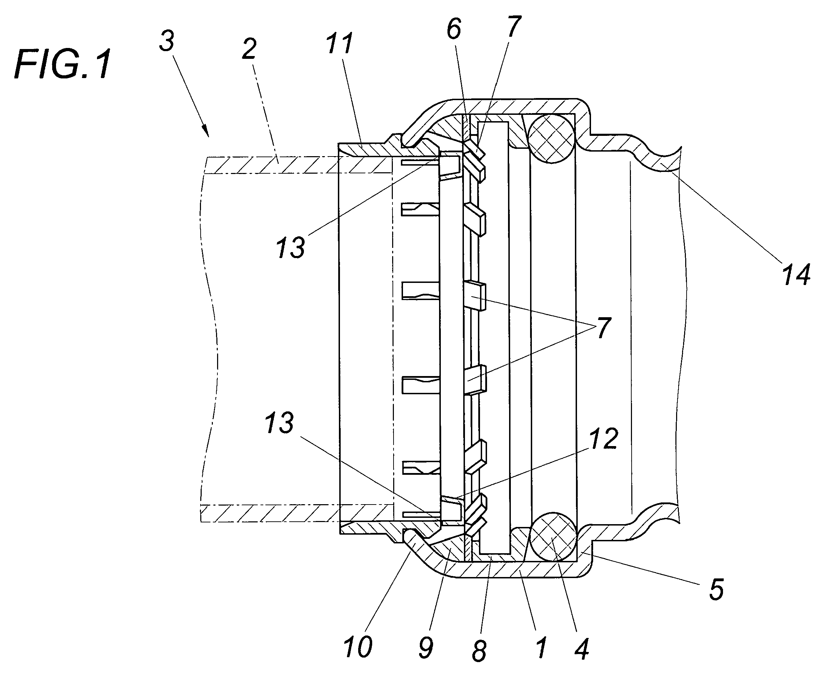

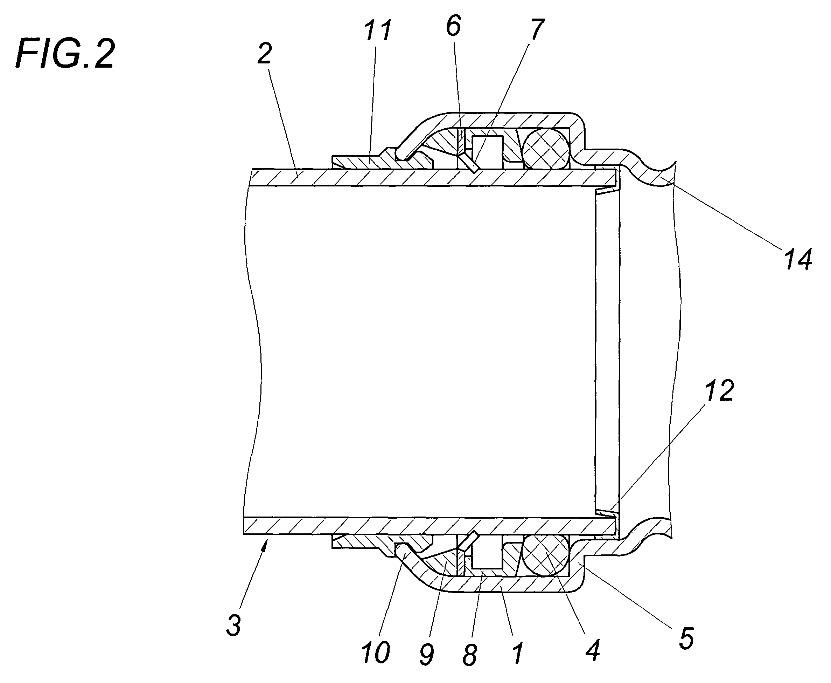

Die Steckkupplung gemäß dem Ausführungsbeispiel nach den Fig. 1 und 2 weist eine Kupplungshülse 1 auf, in die das Rohrende 2 eines anzuschließenden Rohrs 3 eingesteckt werden kann. Die Dichtung zwischen der Kupplungshülse 1 und dem Außenmantel des Rohrendes 2 erfolgt über einen Dichtungsring 4, der sich an einer Schulter 5 der Kupplungshülse 1 in Einsteckrichtung abstützt. Das in die Kupplungshülse 1 eingesteckte Rohrende 2 wird mit Hilfe eines dem Dichtungsring 4 vorgelagerten Sperrring 6 gegenüber einem Ausziehen aus der Kupplungshülse 1 axial festgehalten. Zu diesem Zweck weist der Sperrring 6 Rückhalteklauen 7 auf, die in Einsteckrichtung geneigt verlaufen und sich mit ihren scharfkantigen Stirnseiten an den Außenmantel des Rohrendes 2 federnd anlegen, sodass die Rückhalteklauen 7 beim Versuch, das Rohrende 2 aus der Kupplungshülse 1 herauszuziehen, das Rohrende 2 unter einer Selbsthemmung axial festhalten. Die axiale Abstützung des Sperrrings 6 erfolgt über Distanzringe 8 und 9, wobei der Distanzring zwischen dem Dichtungsring 4 und dem Sperrring 6 die Lage des Dichtungsrings 4 gegenüber dem Sperrring 6 sichert, während der Distanzring 9 die axiale Abstützung des Sperrrings 6 gegenüber der Kupplungshülse 1 übernimmt. Die Kupplungshülse 1 weist zu diesem Zweck einen eingezogenen Rand 10 auf, der nach dem Einlegen des Dichtungsrings 4 und des Sperrrings 6 mit den Distanzringen 8 und 9 umgebördelt wird. Zum einfacheren Einführen des Rohrendes 2 in die Kupplungshülse 1 ist in die durch den eingezogenen Rand 10 der Kupplungshülse 1 gebildete Einführöffnung eine hülsenartige Einführhilfe 11 vorgesehen.

Wird zum Anschluss eines Rohrs 3 das Rohrende 2 in die Kupplungshülse 1 eingeführt, so besteht insbesondere dann, wenn die Stirnseite des Rohrendes 2 vor allem eines Rohrs 3 aus Metall nicht entsprechend bearbeitet wurde, die Gefahr, dass das Rohrende 2 mit seiner Stirnseite den Dichtungsring 4 beschädigt. Um eine solche Beschädigungsgefahr auszuschließen, ist ein Schutzring 12 vorgesehen, der die Stirnseite des Rohrendes 2 von außen umfasst und daher den Dichtungsring 4 gegenüber der Stirnseite des Rohrendes 2 abdeckt, wenn das Rohrende 2 mit dem aufgeschobenen Schutzring 2 über den Dichtungsring 4 hinweggeführt wird.

Damit der Schutzring 12, der vorteilhaft einen U-förmigen Querschnitt aufweist, was jedoch nicht zwingend ist, in einer zur Aufnahme der Stirnseite des Rohrendes 2 konstruktiv vorgegebenen Lage gehalten werden kann, ist der Schutzring 12 über eine Sollbruchverbindung 13 an der hülsenförmigen Einführhilfe 11 angeschlossen. Diese Sollbruchverbindung 13 kann konstruktiv unterschiedlich gelöst werden und hat die Aufgabe, den Schutzring 12 freizugeben, sobald der Schutzring 12 über die anschlagende Stirnseite des Rohrendes 2 in axialer Richtung entsprechend beaufschlagt wird, sodass der Schutzring 12 mit dem Rohrende 2 mitgenommen und über den Dichtungsring 4 hinweggeführt wird, bis die Stirnseite des Rohrendes 2 gemäß der Fig. 2 an einen durch eine Einschnürung 14 der Kupplungshülse 1 gebildeten Anschlag anstößt. Der über den Dichtungsring 4 gezogene Schutzring 12 behindert die Dichtung zwischen dem Rohrende 2 und der Kupplungshülse 1 nicht, weil der Dichtungsring 4 nach dem Vorbeibewegen des Schutzrings 12 unmittelbar am Außenmantel des Rohrendes 2 anliegt.

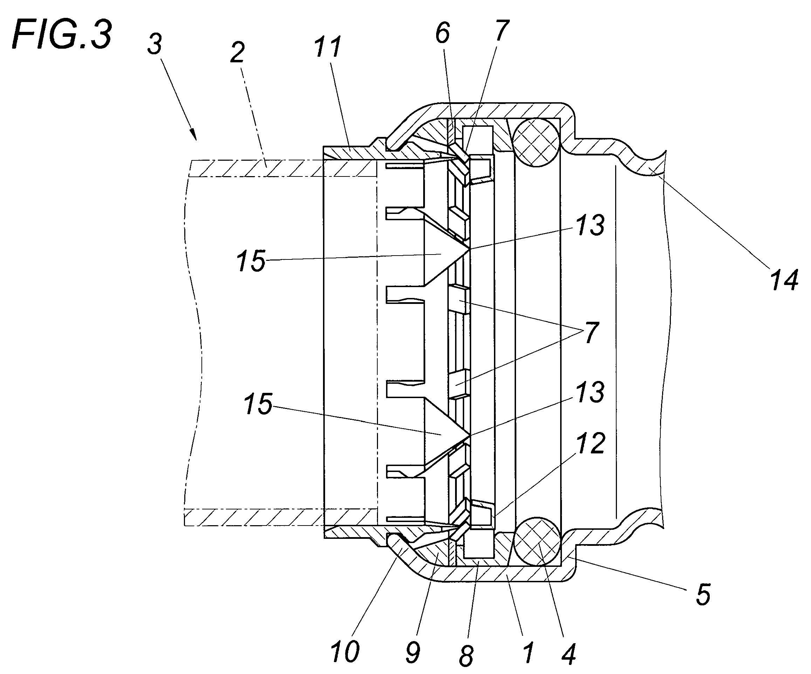

Gemäß dem Ausführungsbeispiel nach den Fig. 1 und 2 liegt der Schutzring 12 in Einsteckrichtung vor dem Sperrring 6. Der Schutzring 12 muss daher beim Einführen eines Rohrendes 2 in die Kupplungshülse 1 auch über die Rückhalteklauen 7 des Sperrrings 6 hinweggeführt werden. Soll dieser Umstand vermieden werden, so kann der Schutzring 12 auch zwischen dem Sperrring 6 und dem Dichtungsring 4 zu liegen kommen. Zu diesem Zweck kann der Schutzring 12 über eine Sollbruchverbindung dem Distanzring 8 zugeordnet werden. Nach der Fig. 3 trägt die hülsenförmige Einführhilfe 11 auch den zwischen dem Sperrring 6 und dem Dichtungsring 4 vorgesehenen Schutzring 12, wobei die hülsenförmige Einführhilfe 11 zwischen den Halteklauen 7 des Sperrrings 6 durchgreifende Finger 15 zur Halterung des Schutzrings 12 bildet. Bei einer solchen Ausführungsform muss allerdings der Schutzring 12 mit den Fingern 15 ausreichend elastisch ausgebildet sein, um ihn bei der Montage der hülsenförmigen Einführhilfe an den Halteklauen 7 vorbei einführen zu können. Zu diesem Zweck kann ein geschlitzter Schutzring 12 vorgesehen sein.

## Patentansprüche

1. Steckkupplung für ein Rohr (3), insbesondere für Wasserleitungen, mit einer das Rohrende (2) aufnehmenden Kupplungshülse (1), mit einem in die Kupplungshülse (1) eingesetzten Dichtungsring (4), mit einem dem Dichtungsring (4) in Einsteckrichtung des Rohrendes (2) vorgelagerten Sperrring (6), der gegen das Rohrende (2) vorstehende, in Einsteckrichtung geneigte Rückhalteklauen (7) bildet, und mit einem dem Dichtungsring (4) ebenfalls vorgelagerten, gegenüber der Kupplungshülse (1) in Einsteckrichtung axial abgestützten Ringkörper, **dadurch gekennzeichnet, dass** der Ringkörper einen Schutzring (12) zum Umfassen der Stirnseite des Rohrendes (2) von außen sowie eine an den Schutzring (12) angeschlossene Sollbruchverbindung (13) aufweist, die den Schutzring (12) bei einer Beaufschlagung in axialer Richtung freigibt.

2. Steckkupplung nach Anspruch 1 **dadurch gekennzeichnet, dass** der Schutzring (12) einen U-förmigen Querschnitt aufweist.

3. Steckkupplung nach Anspruch 1 oder 2, **dadurch gekennzeichnet, dass** der den Schutzring (12) aufweisende Ringkörper einen Distanzring (8, 9) für den Sperrring (6) bildet.

4. Steckkupplung nach Anspruch 1 oder 2, **dadurch gekennzeichnet, dass** der den Schutzring (12) aufweisende Ringkörper eine Einführhilfe (11) für das Rohrende (2) bildet.

5. Steckkupplung nach einem der Ansprüche 1 bis 4, **dadurch gekennzeichnet, dass** der Schutzring (12) für die Stirnseite des Rohrendes (2) zwischen dem Sperrring (6) und dem Dichtungsring (4) vorgesehen ist.

6. Steckkupplung nach einem der Ansprüche 1 bis 5, **dadurch gekennzeichnet, dass** die Kupplungshülse (1) für das Rohrende (2) einen axialen Anschlag bildet, dessen axialer Abstand vom Dichtungsring (4) größer als die axiale Höhe des Schutzrings (12) auf der Außenseite des Rohrendes (2) ist.

## Claims

1. Plug-in coupling for a pipe (3), in particular for water conduits, having a coupling sleeve (1) which receives the pipe end (2), having a sealing ring (4) which is inserted into the coupling sleeve (1), having a locking ring (6) which is mounted upstream of the sealing ring (4) in the plug-in direction of the pipe end (2) and which forms retaining claws (7) which protrude towards the pipe end (2) and are inclined in the plug-in direction, and having an annular body which is likewise mounted upstream of the sealing ring (4) and is supported axially with respect to the coupling sleeve (1) in the plug-in direction, **characterised in that** the annular body comprises a protective ring (12) for surrounding the end face of the pipe end (2) from the outside and an intended breaking connection (13) which is attached to the protective ring (12) and which releases the protective ring (12) when pressure is exerted in the axial direction.

2. Plug-in coupling as claimed in claim 1, **characterised in that** the protective ring (12) has a U-shaped cross-section.

3. Plug-in coupling as claimed in claim 1 or 2, **characterised in that** the annular body comprising the protective ring (12) forms a spacer ring (8, 9) for the locking ring (6).

4. Plug-in coupling as claimed in claim 1 or 2, **characterised in that** the annular body comprising the protective ring (12) forms an insertion aid (11) for the pipe end (2).

5. Plug-in coupling as claimed in any one of claims 1 to 4, **characterised in that** the protective ring (12) for the end face of the pipe end (2) is provided between the locking ring (6) and the sealing ring (4).

6. Plug-in coupling as claimed in any one of claims 1 to 5, **characterised in that** the coupling sleeve (1) for the pipe end (2) forms an axial stop, the axial distance of which from the sealing ring (4) is greater than the axial height of the protective ring (12) on the outside of the pipe end (2).

## Revendications

1. Raccord enfichable pour un tuyau (3), en particulier pour des conduites d'eau, avec un manchon de raccordement (1) recevant l'extrémité (2) du tuyau, avec une bague d'étanchéité (4) insérée dans le manchon de raccordement (1), avec une bague de blocage (6) montée en amont de la bague d'étanchéité (4) dans le sens d'introduction de l'extrémité (2) du tuyau, qui forme des griffes de retenue (7) dépassant par rapport à l'extrémité (2) du tuyau et inclinées dans le sens d'introduction, et avec un corps annulaire également monté en amont de la bague d'étanchéité (4) et prenant appui axialement dans le sens d'introduction contre le manchon de raccordement (1), **caractérisé en ce que** le corps annulaire présente une bague de sécurité (12) pour entourer la face frontale de l'extrémité (2) du tuyau de l'extérieur, ainsi qu'une liaison (13) à point de rupture raccordée au niveau de la bague de sécurité (12) qui libère la bague de sécurité (12) lors d'une sollicitation dans le sens axial.

2. Raccord enfichable selon la revendication 1, **caractérisé en ce que** la bague de sécurité (12) présente une section transversale en forme de U.

3. Raccord enfichable selon la revendication 1 ou 2, **caractérisé en ce que** le corps annulaire présentant la bague de sécurité (12) forme une bague d'espacement (8, 9) pour la bague de blocage (6).

4. Raccord enfichable selon la revendication 1 ou 2, **caractérisé en ce que** le corps annulaire présentant la bague de sécurité (12) forme un moyen auxiliaire d'introduction (11) pour l'extrémité (2) du tuyau.

5. Raccord enfichable selon l'une des revendications 1 à 4, **caractérisé en ce que** la bague de sécurité (12) est prévue pour la face frontale de l'extrémité (2) du tuyau entre la bague de blocage (6) et la bague d'étanchéité (4).

6. Raccord enfichable selon l'une des revendications 1 à 5, **caractérisé en ce que** le manchon de raccordement (1) pour l'extrémité (2) du tuyau forme une butée axiale, dont l'espacement axial de la bague d'étanchéité (4) est plus grand que la hauteur axiale de la bague de sécurité (12) sur le côté extérieur de l'extrémité (2) du tuyau.
